Europäisches Patentamt

European Patent Office

Office européen des brevets

(11) Numéro de publication: **0 297 954**
A1

## DEMANDE DE BREVET EUROPEEN

(21) Numéro de dépôt: 88401575.1

(22) Date de dépôt: 22.06.88

(51) Int. Cl.⁴: **F 16 K 17/12**
G 21 F 7/04, F 24 F 11/02

(30) Priorité: 25.06.87 FR 8708947

(43) Date de publication de la demande:
04.01.89 Bulletin 89/01

(84) Etats contractants désignés:
BE CH DE GB IT LI

(71) Demandeur: **COMMISSARIAT A L'ENERGIE ATOMIQUE**
**31/33, rue de la Fédération**
**F-75015 Paris (FR)**

(72) Inventeur: **Couleaud, Jean**
**Rue du Docteur Babin 53 Cité Georges Lanson Bt.F**
**F-91220 Bretigny sur Orge (FR)**

**Galan, Claude**
**5, Avenue Georges Clémenceau**
**F-94480 Ablon sur Seine (FR)**

(74) Mandataire: **Mongrédien, André et al**
**c/o BREVATOME 25, rue de Ponthieu**
**F-75008 Paris (FR)**

(54) Soupape de sécurité à pleine ouverture pour une enceinte en dépression.

(57) Soupape de sécurité pour une enceinte en dépression. Elle comprend un corps tubulaire constitué d'une branche principale (39) et d'une branche secondaire (43) raccordée à ladite branche principale (39), et débouchant dans celle-ci par un orifice latéral (47), un piston (49) coulissant à l'intérieur de la branche principale (39), pour dégager l'orifice latéral (47), une butée (45) limitant le déplacement vers le haut du piston (49) dans sa position de fermeture complète de l'orifice latéral (47). La partie inférieure de la branche principale (39) est fermée par un fond (41) présentant un orifice central (57) de mise en communication avec une pression de référence. Un canal capillaire (55) met en communication une zone de la branche principale (39) située à proximité de l'orifice latéral (47) et du côté du fond (41) avec une zone située à proximité du fond (41) de cette même branche. Le piston (49) comporte un moyen pour obturer l'orifice central (57) du fond (41).

FIG. 2

**Description**

## SOUPAPE DE SECURITE A PLEINE OUVERTURE POUR UNE ENCEINTE EN DEPRESSION

La présente invention concerne une soupape de sécurité à pleine ouverture pour une enceinte en dépression.

Les boîtes à gants sont des enceintes fermées permettant de manipuler des produits dangereux tels que des produits chimiques ou des produits radioactifs. Afin de préserver l'opérateur, les boîtes à gants sont maintenues en permanence en dépression, afin d'éviter une fuite de matières dangereuses à l'extérieur de la boîte à gants. La dépression à l'intérieur de la boîte à gants est régulée de manière à être maintenue entre un seuil supérieur et un seuil inférieur.

On connaît déjà divers dispositifs de surveillance permettant la régulation de la pression dans une enceinte en dépression telle qu'une boîte à gants. A titre d'exemple, la demande de brevet français n°84 14684 déposée le 25 septembre 1984 décrit un dispositif de surveillance de la pression placé sur le circuit de régulation de celle-ci. Ce dispositif comprend un corps tubulaire constitué par une branche principale verticale dans laquelle coulisse un piston lestable dont le déplacement en translation, limité par une butée supérieure et par une butée inférieure respectivement, dégage un orifice latéral pratiqué dans ladite branche principale, cet orifice latéral étant relié à une pompe d'extraction permettant de créer une dépression.

Toutefois, en cas de rupture du confinement de l'enceinte en dépression, il est nécessaire d'assurer une extraction plus importante que l'extraction prévue en cours du fonctionnement nominal du système de régulation. Les normes de sécurité imposent un débit minimal. Ce débit ne peut être obtenu avec un dispositif du type décrit ci-dessus. En effet, la pression qui s'exerce sur la face supérieure du piston reste inférieure à la pression qui s'exerce sur sa face inférieure en raison des pertes de charge qui se produisent dans le conduit qui relie le dispositif à l'enceinte, et également les pertes de charge dans le filtre placé sur ce conduit. Par suite, même en cas de rupture de l'enceinte de confinement, le piston dont il est muni ne permettra pas une ouverture complète de l'orifice latéral et par conséquent un débit d'aspiration conforme aux normes imposées par la réglementation.

La présente invention a précisément pour objet une soupape de sécurité destinée à une enceinte en dépression telle qu'une boîte à gants permettant d'obtenir une pleine ouverture lorsque la pression à l'intérieur de l'enceinte s'élève au-dessus d'une valeur d'alarme ou valeur critique, par exemple en cas de rupture de confinement de cette enceinte qui est alors mise en communication avec la pression atmosphérique.

A cet effet, la présente invention concerne une soupape de sécurité pour une enceinte en dépression comprenant un corps tubulaire constitué d'une branche principale et d'une branche secondaire raccordée à ladite branche principale, et débouchant dans celle-ci par un orifice latéral, un piston monté coulissant à l'intérieur de ladite branche principale, pour dégager ledit orifice latéral de la branche principale, une butée montée à l'intérieur de la branche principale limitant le déplacement vers le haut dudit piston dans sa position de fermeture complète de l'orifice latéral, la partie inférieure de ladite branche principale étant fermée par un fond présentant un orifice central de mise en communication avec une pression de référence, caractérisée en ce qu'un canal capillaire met en communication une zone de la branche principale située à proximité de l'orifice latéral et du côté du fond avec une zone située à proximité du fond de cette même branche, ledit piston comportant un moyen pour obturer l'orifice central du fond.

Selon une réalisation particulière, la soupape comporte en outre des moyens de réarmement manuel du piston permettant de faire revenir le piston dans sa position de fermeture complète de l'orifice latéral après un déclenchement de la soupape, ces moyens étant constitués par un bouton poussoir monté dans le fond de la branche inférieure.

Selon une autre réalisation particulière, la soupape comporte en outre des moyens de réarmement automatique permettant de faire revenir le piston dans sa position de fermeture complète de l'orifice latéral après un déclenchement de la soupape, lesdits moyens de réarmement automatique étant constitués par un cylindre de réarmement fermé à ses deux extrémités et à l'intérieur duquel un piston de réarmement est monté coulissant, ledit cylindre de réarmement comportant un orifice de mise en communication avec une pression de référence, une canalisation reliant le fond de la branche principale de la soupape à la partie inférieure du cylindre de réarmement, l'extrémité de cette canalisation faisant saillie à l'intérieur du cylindre et pouvant être obturée par le piston de réarmement et une canalisation reliant la partie supérieure du cylindre de réarmement à la partie supérieure de la branche principale de la soupape de sûreté.

L'invention sera mieux comprise à la lecture de la description qui suit, faite en référence aux dessins annexés, sur lesquels :

- la figure 1 représente une vue schématique d'ensemble d'une enceinte sous pression équipée d'une soupape de sécurité conforme à l'invention,

- la figure 2 représente une vue en élévation et en coupe d'un premier mode de réalisation d'une soupape de sécurité conforme à l'invention à réarmement manuel,

- la figure 3 représente une vue en coupe et en élévation d'un second mode de réalisation d'une soupape de sécurité conforme à l'invention à réarmement automatique,

- les figures 4, 5 et 6 illustrent le fonctionnement d'une soupape de sécurité conforme à l'invention.

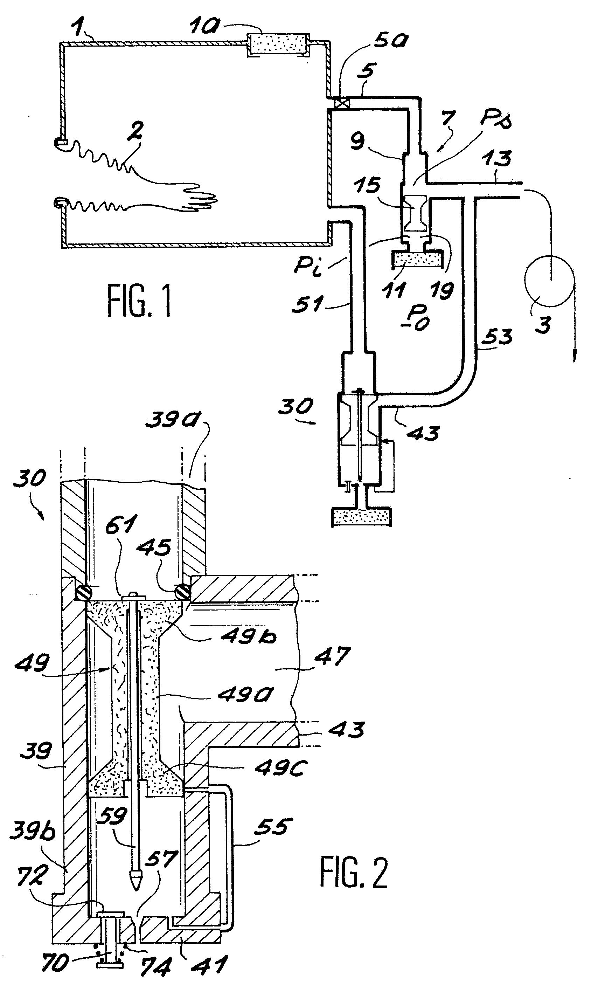

On a représenté sur la figure 1 une boîte à gants 1 comportant un ou plusieurs gants 2 permettant la manipulation de produits situés à l'intérieur de la boîte à gants. Afin de maintenir en permanence une dépression à l'intérieur de la boîte à gants, celle-ci est raccordée à une pompe d'extraction 3 par l'intermédiaire d'une canalisation 5 comportant un filtre 5a. Un dispositif de surveillance de la pression qui est par exemple du type décrit dans la demande de brevet français n° 84 14684 citée précédemment est intercalé sur la canalisation 5. Ce dispositif comporte un corps tubulaire 7 constitué d'une branche principale 9 dont la partie supérieure est reliée à l'intérieur de la boîte à gants 1 par l'intermédiaire de la canalisation 5 et dont la partie inférieure est en communication avec une pression de référence, par exemple la pression atmosphérique, par l'intermédiaire d'un filtre 11. Une branche secondaire 13, raccordée à la pompe d'aspiration 3 débouche à l'intérieur de la branche principale 9. Un piston 15 lesté de manière appropriée est monté coulissant à l'intérieur de la branche principale 9. Ce piston 15 est maintenu en position d'équilibre sous l'effet d'une part de la dépression régnant à l'intérieur de la branche 5 et d'autre part de la dépression régnant à l'intérieur de la branche 13. Lorsque la pression à l'intérieur de l'enceinte 1 augmente, la différence de pression entre la branche 5 et la branche 13 devient plus importante, de telle sorte que le piston 15 subit une force verticale dirigée vers le bas qui tend à augmenter la section de passage de l'orifice latéral qu'il laisse libre. Ainsi, l'extraction est augmentée et une quantité d'air plus grande est extraite de la boîte à gants 1, ce qui permet de rétablir la pression à sa valeur convenable.

En sens inverse, lorsque la dépression à l'intérieur de l'enceinte 1 est trop faible, le piston 15 a tendance à remonter et à obturer la branche 13. Ainsi, l'extraction est réduite, de telle sorte que la pression peut revenir à une valeur convenable par aspiration d'une quantité d'air au travers du filtre 1a prévu dans la paroi de la boîte à gants.

Toutefois, avec un dispositif de ce type, l'orifice latéral laissé libre par le piston 15 ne peut s'ouvrir complètement. En effet, si l'on désigne par Po la pression de référence, par Ps la pression régnant au-dessus du piston 15 et par Pi la pression sous ce piston, par suite de la présence du filtre 5a et de la perte de charge dans le conduit 5, la pression Ps reste inférieure à Pi et empêche l'ouverture complète du piston. L'ouverture du piston atteint ainsi une valeur limite qui ne peut être franchie, et ceci même si la dépression à l'intérieur de l'enceinte 1 tend à s'annuler, par exemple par rupture du confinement de l'enceinte. Dans ce cas, le volume intérieur de la boîte à gants est mis en communication avec la pression atmosphérique et sa pression tend à égaler la pression atmosphérique. En d'autres termes, la dépression régnant dans la boîte à gants tend à devenir nulle. Afin de maintenir une certaine sécurité même en cas de rupture de l'enceinte de confinement, les normes de sécurité imposent que, même dans ce cas, une certaine dépression puisse être maintenue à l'intérieur de la boîte à gants. Pour que cette dépression minimale puisse être obtenue, l'ouverture complète de l'orifice latéral permettant un débit d'extraction maximal doit être atteint. Cependant, cette ouverture complète ne peut être obtenue avec le dispositif de surveillance conforme à l'art antérieur.

La soupape de sécurité 30 conforme à l'invention représentée schématiquement sur la figure 1 et plus en détail sur la figure 2, permet d'obtenir cette pleine ouverture. La soupape 30 n'est pas une soupape de régulation. En d'autres termes, elle sert seulement en cas d'incident, tel qu'une rupture de l'enceinte de confinement, et doit donc être utilisée en parallèle avec un dispositif de régulation, par exemple le dispositif 7 décrit précédemment.

La soupape de sécurité (figure 2) désignée dans son ensemble par la référence 30 comporte une branche principale 39 se composant d'une partie supérieure 39a et d'une partie inférieure 39b. La partie inférieure 39b de la branche principale 39 est fermée par un fond 41. Une branche secondaire 43 se raccorde sur la branche principale 39 sensiblement à mi-hauteur. Un élément d'arrêt, tel qu'un joint d'étanchéité torique ou un jonc d'arrêt 45 est monté à l'intérieur de la branche principale juste au-dessus de l'orifice latéral 47. Le joint torique 45 a pour fonction de limiter le déplacement vers le haut du piston 49 monté coulissant à l'intérieur de la branche principale 39.

Comme on peut le voir sur le schéma d'ensemble de la figure 1, la partie supérieure de la branche principale 39a est raccordée à la boîte à gants 1 par une canalisation 51 tandis que la branche secondaire 43 est raccordée à une pompe d'extraction par la canalisation 53. Afin de simplifier l'installation, on a utilisé la même pompe 3 pour la soupape 7 et pour la soupape 30.

La partie inférieure 39b de la branche principale 39 est reliée à une pression de référence telle que la pression atmosphérique, de préférence par l'intermédiaire d'un filtre.

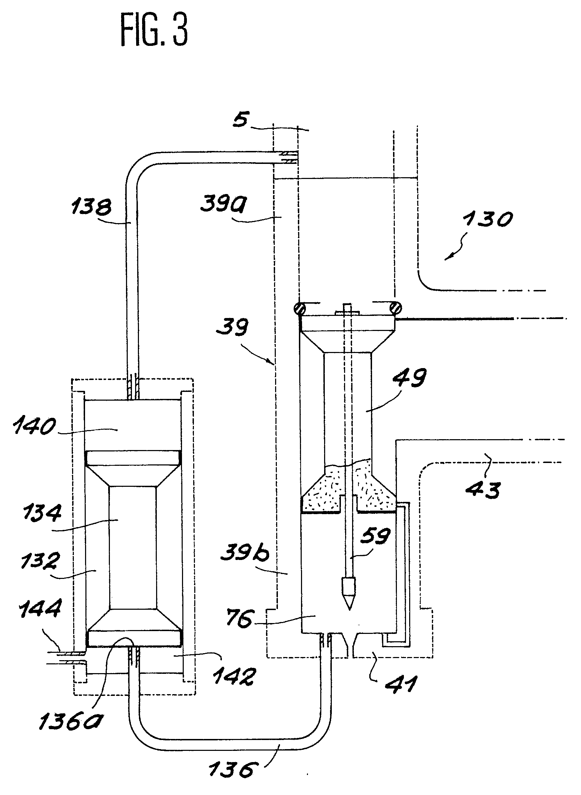

Comme on peut le voir sur la figure 3, le piston 49, qui présente sensiblement la forme d'un diabolo, comporte une partie cylindrique 49a, une partie 49b tronconique supérieure terminée par une partie cylindrique et une partie tronconique 49c inférieure, également terminée par une partie cylindrique. La partie supérieure 49b et la partie cylindrique 49c guident le piston dans la branche principale 39.

Conformément à l'invention, un conduit de faible section, dit conduit capillaire 55, relie une zone de la partie inférieure 39b de la branche principale 39 située à proximité de l'orifice latéral 47 à une zone située au voisinage du fond 41. Comme on peut le remarquer sur la figure 2, lorsque le piston 49 est en butée contre l'élément d'arrêt 45, la partie inférieure cylindrique 49c est située en regard de l'ouverture du canal capillaire 45, de telle sorte que ce canal est obturé.

En outre, conformément à l'invention, le piston 49 est muni de moyens d'obturation d'un orifice central 57 prévu dans le fond 41. Dans l'exemple décrit, ces moyens sont constitués par une tige 59 comportant une extrémité inférieure en forme de pointeau montée coaxialement à l'orifice 57. La tige 59 est montée coulissante à l'intérieur d'un trou traversant de part en part le piston 49. Une collerette 61 prévue à la partie supérieure de la tige 59 retient cette dernière lorsque le piston est dans la position haute représentée sur la figure 2.

On a prévu en outre un bouton poussoir 70 dans le fond 41. Ce bouton est muni d'une tête 72 qui fait saillie à l'intérieur de la branche principale. La tête 72 a pout but d'empêcher le piston 49 de venir complètement en contact avec le fond 41. Un ressort hélicoïdal de rappel est monté autour de la tige du bouton poussoir 70 à l'extérieur du fond 41. Enfin, l'alésage dans lequel coulisse le bouton poussoir est sensiblement plus large que le diamètre extérieur de la tige de ce bouton afin de permettre une introduction d'air dans le volume 76.

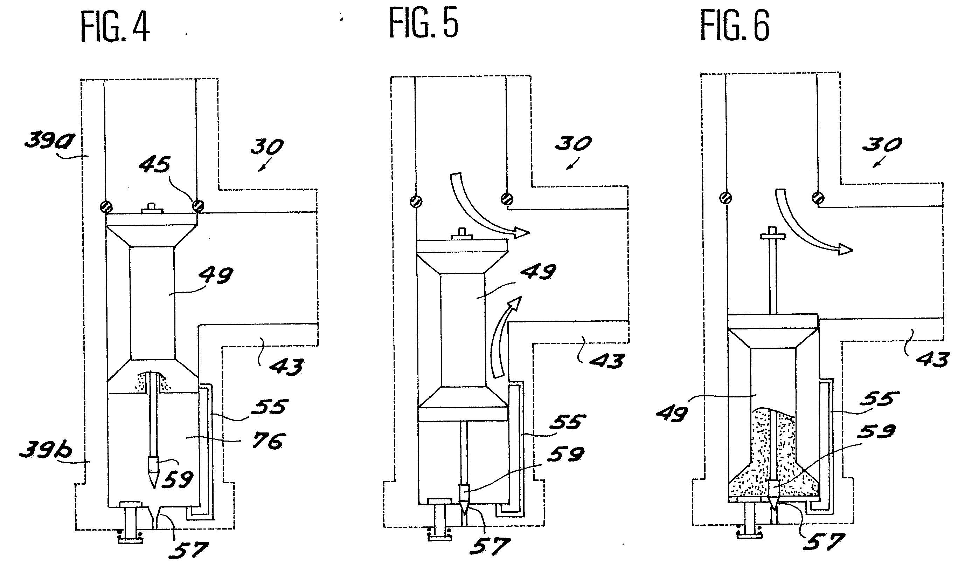

On a représenté sur les figures 4 à 6 le fonctionnement de la soupape de sécurité 30 représentée sur la figure 2. Sur la figure 4, la soupape 30 se trouve dans la position représentée sur la figure 2. En d'autres termes, le piston 49 est en butée contre l'élément d'arrêt 45. Dans cette position, le canal capillaire 55 est obturé, l'orifice 57 du fond 41 est ouvert, de telle sorte que le volume intérieur 76 soit en communication avec la pression de référence, par exemple l'atmosphère. Etant donné que la branche secondaire 43 est reliée à la pompe d'extraction 3 et la branche 39a à l'intérieur de l'enceinte, une dépression existe entre la face supérieure du piston et la branche 43. Il est donc nécessaire que le piston 49 soit lesté de manière à être plus léger que le piston 15 du dispositif de surveillance 7 afin que l'orifice reste complètement fermé. La fonction de régulation de pression est assurée pendant cette phase par le dispositif de surveillance 7 décrit précédemment.

Si la pression à l'intérieur de l'enceinte augmente au-delà d'un seuil prédéterminé, appelé seuil d'alarme ou seuil critique, la dépression entre la branche 39a et la branche 43 devient suffisante pour provoquer l'ouverture du piston 49 qui s'éloigne alors de l'élément d'arrêt 45 par un mouvement vertical dirigé vers le bas, comme représenté sur la figure 5. Par suite de ce mouvement vers le bas, le canal capillaire 55 est dégagé, de telle sorte que la dépression créée par la pompe d'extraction 43 peut être communiquée au volume 76 situé sous la face inférieure du piston par l'intermédiaire du canal capillaire. L'aspiration effectuée par le canal capillaire est suffisamment importante pour surpasser l'entrée d'air provenant de l'orifice central 57 relié à la pression de référence. Ceci permet la poursuite du mouvement vers le bas du piston 49 jusqu'à ce que le pointeau de la tige 59 vienne obturer l'orifice 57. A partir de ce moment, le volume intérieur 76 n'est plus en communication avec la pression atmosphérique, de telle sorte que la pression à l'intérieur du volume 76 continue à diminuer. Ainsi, le piston 49 peut continuer sa course vers le bas jusqu'à atteindre la position représentée sur la figure 6. Dans cette position, la tige 59 n'est plus soutenue par la collerette 61 reposant sur le piston mais repose directement sur le fond 41. L'orifice latéral 47 est ouvert en totalité, de telle sorte qu'un débit d'extraction maximal peut être obtenu pour l'enceinte 1.

D'après ce qui précède, on constate que le but de l'invention a effectivement été atteint, à savoir maintenir une dépression minimale à l'intérieur de l'enceinte, même dans des conditions critiques telles qu'une rupture du confinement de cette dernière.

Les causes de l'incident qui ont donné lieu au déclenchement de la soupape de sécurité ayant été surmontées, par exemple par colmatage de la fuite, le circuit de régulation normal peut être remis en route. Il convient donc de refermer la soupape de sécurité. Ceci peut être obtenu au moyen du bouton de réarmement manuel 70. A partir de la position représentée sur la figure 6, on appuie sur le bouton 70, ce qui produit un début de soulèvement du piston 49. le volume 76 situé sous le piston est alors mis en communication avec la pression de référence par le fait que le diamètre du bouton 70 a été prévu sensiblement plus petit que le trou du fond 41 dans lequel il est monté. La pression dans le volume 76 peut ainsi augmenter progressivement, de telle sorte que le piston 49 remonte jusqu'à ce que la collerette 61 fasse décoller le pointeau de l'orifice 57. Le piston revient alors dans la position représentée sur la figure 4 dans laquelle le canal capillaire est à nouveau obturé. On est ainsi revenu à la position d'origine.

On a représenté sur la figure 3 un deuxième mode de réalisation d'une soupape de sécurité, désignée par la référence 130, conforme à la présente invention. Cette soupape de sécurité est identique dans son principe et dans son fonctionnement au premier mode de réalisation décrit en référence aux figures 2 et 4 à 6. Elle en diffère seulement par la réalisation des moyens qui permettent son réarmement. Alors que la soupape de sécurité de la figure 2 comporte des moyens de réarmement manuel qui nécessitent l'intervention d'un opérateur, la soupape de sécurité 130 de la figure 3 comporte des moyens qui permettent son réarmement sans intervention d'un opérateur.

Dans ce mode de réalisation, les pièces identiques au mode de réalisation de la figure 2 ont été désignées par des références identiques.

La soupape de ce mode de réalisation, désignée par la référence générale 130, comporte, au lieu du bouton poussoir 70, un cylindre 132 à l'intérieur duquel un piston 134 présentant une forme de diabolo identique à celle du piston 49 est monté coulissant. Le cylindre 132 est fermé à ses deux extrémités et il est relié à son extrémité inférieure par une canalisation 136 au fond 41 du corps de soupape et, à son extrémité supérieure, par une canalisation 138 à la branche supérieure du corps principal ou à la canalisation 5 reliant cette branche principale à la boîte à gants.

La canalisation 136 fait saillie au-dessus du fond inférieur du cylindre 132 d'une distance prédéterminée, de manière que lorsque le piston 134 repose sur l'extrémité 136a de cette canalisation 136, un certain volume 142 soit ménagé sous ce piston 134. Une canalisation 144 débouche à l'intérieur de ce volume 142 de manière à le mettre en communication avec une pression de référence, par exemple la pression atmosphérique, par l'intermédiaire d'un filtre ou éventuellement sans filtre.

Le fond 41 présente un orifice 57 identique à l'orifice du mode de réalisation 30 déjà décrit, ainsi qu'un pointeau obturateur 59 en tous points identique au mode de réalisation précédent. Pendant les étapes représentées sur les figures 4 à 6, correspondant au déclenchement de la soupape lorsqu'un seuil critique est dépassé à l'intérieur de la boîte à gants, le fonctionnement de ce mode de réalisation est identique à celui du mode de réalisation décrit. La différence se situe au moment du réarmement. Lorsqu'une pression normale a été rétablie à l'intérieur de la boîte à gants 1, cette pression est communiquée par la canalisation 138 au volume 140 qui se trouve au-dessus de la face supérieure 134. L'orifice 136a de la canalisation 136 étant obturé par la face inférieure du piston 134, le volume 142 interne au cylindre 132 situé sous la face inférieure du piston 134 est en communication avec une pression de référence, par exemple la pression atmosphérique, par l'intermédiaire de la canalisation 144. En conséquence, la pression qui s'exerce sur la face inférieure du piston est plus importante que la pression qui s'exerce sur sa face supérieure. Le poids du piston 134 est déterminé par un lestage approprié de manière que cette pression soit suffisante pour lui permettre de s'élever à l'intérieur du cylindre 132, ce qui aboutit à dégager l'orifice 136a de la canalisation 136 et, par suite, à mettre en communication le volume 76 situé sous la face inférieure du piston 49 de la soupape de sûreté en communication avec la pression de référence régnant dans le volume 142. Il apparaît alors une différence de pression entre la face inférieure et la face supérieure du piston 49, la pression sur cette face inférieure étant supérieure à la pression qui s'exerce sur la face supérieure, de telle sorte que le piston 49 s'élève à son tour pour retrouver la position dans laquelle il est représenté sur la figure 3. La soupape de sûreté est alors refermée, comme elle l'était dans son état initial. Le cycle étant fermé, le fonctionnement normal de l'enceinte en régulation peut reprendre.

**Revendications**

1. Soupape de sécurité pour une enceinte en dépression (1) comprenant un corps tubulaire constitué d'une branche principale (39) et d'une branche secondaire (43) raccordée à ladite branche principale (39), et débouchant dans celle-ci par un orifice latéral (47), un piston (49) monté coulissant à l'intérieur de ladite branche principale (39), pour dégager ledit orifice latéral (47) de la branche principale, une butée (45) montée à l'intérieur de la branche principale (39) limitant le déplacement vers le haut dudit piston (49) dans sa position de fermeture complète de l'orifice latéral (47), la partie inférieure de ladite branche principale (39) étant fermée par un fond (41) présentant un orifice central (57) de mise en communication avec une pression de référence, caractérisée en ce qu'un canal capillaire (55) met en communication une zone de la branche principale (39) située à proximité de l'orifice latéral (47) et du côté du fond (41) avec une zone située à proximité du fond (41) de cette même branche, ledit piston (49) comportant un moyen pour obturer l'orifice central (57) du fond (41).

2. Soupape de sécurité selon la revendication 1, caractérisée en ce qu'elle comporte en outre des moyens (70) de réarmement manuel du piston (49) permettant de faire revenir le piston (49) dans sa position de fermeture complète de l'orifice latéral (47) après un déclenchement de la soupape, ces moyens étant constitués par un bouton poussoir (70) monté dans le fond (41) de la branche inférieure (39b).

3. Soupape de sécurité selon la revendication 2, caractérisé en ce que le bouton poussoir (70) comporte une tête (72) qui permet de laisser un espace libre entre le fond du piston et le fond (41) de la branche inférieure principale.

4. Soupape de sécurité selon la revendication 1, caractérisée en ce qu'elle comporte en outre des moyens de réarmement automatique permettant de faire revenir le piston (49) dans sa position de fermeture complète de l'orifice latéral après un déclenchement de la soupape, lesdits moyens de réarmement automatique étant constitués par un cylindre de réarmement (132) fermé à ses deux extrémités et à l'intérieur duquel un piston de réarmement (134) est monté coulissant, ledit cylindre de réarmement (132) comportant un orifice (144) de mise en communication avec une pression de référence, une canalisation (136) reliant le fond de la branche (39b) principale de la soupape à la partie inférieure du cylindre de réarmement (132), l'extrémité (136a) de cette canalisation (136) faisant saillie à l'intérieur du cylindre (132) et pouvant être obturée par le piston de réarmement (134), une canalisation (138) reliant la partie supérieure du cylindre de réarmement (132) à la partie supérieure de la branche principale de la soupape de sûreté.

5. Soupape de sûreté selon l'une quelconque des revendications 1 à 4, caractérisée en ce que les moyens pour obturer l'orifice central (57) formé dans le fond (41) de la partie inférieure (39b) de la branche principale (39) sont constitués par une tige (59) présentant une extrémité formant pointeau, cette tige (59) étant montée coulissance dans un orifice traversant de part en part ledit piston (49).

FIG. 1

FIG. 2

FIG. 3

0297954

FIG.6

FIG.5

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 555 701 (COMMISSARIAT A L'ENERGIE ATOMIQUE) <br> * Page 7, ligne 20 - page 9, ligne 18 * <br> --- | 1 | F 16 K  17/12 <br> G 21 F   7/04 <br> F 24 F  11/02 |
| A | EP-A-0 034 096 (LA CALHENE S.A.) <br> --- | | |
| A | FR-A-2 541 748 (JACOMEX S.A.) <br> ----- | | |

DOMAINES TECHNIQUES RECHERCHES (Int. Cl.4)

F 16 K  17/00
F 24 F  11/00
G 21 F   7/00
G 05 D  16/00

Le présent rapport a été établi pour toutes les revendications

| Lieu de la recherche | Date d'achèvement de la recherche | Examinateur |
|---|---|---|
| LA HAYE | 03-10-1988 | DE SMET F.P. |

EPO FORM 1503 03.82 (P0402)